# EUROPEAN PATENT APPLICATION

(11) **EP 4 746 500 A1**
(43) Date of publication of application: **20.05.2026**
(21) Application number: 23944706.3
(22) Date of filing: 12.07.2023
(51) Int. Cl.: H04W 24/10

(54) **INFORMATION TRANSMISSION METHOD, TERMINAL, NETWORK DEVICE, COMMUNICATION SYSTEM AND MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Gunzelmann, Rainer
(86) International application number: PCT/CN2023/107089
(87) International publication number: WO 2025/010686

(57) **Abstract**

The present disclosure relates to an information transmission method, a terminal, a network device, a communication system and a medium. The method comprises: a terminal sending first information, wherein the first information is used for indicating whether a first measurement needs to be interrupted, the first measurement is a measurement for a first measurement object (MO), and the first measurement is a measurement when a need for gap (NFG) is no gap being required; and the terminal determining the first MO. In the method in the present disclosure, a terminal sends first information to a network device, so as to report whether an interrupt is required when an NFG is no gap being required, and the network device can thus know a terminal capability, so that the terminal can perform a rational measurement according to its own capability, thereby improving the measurement efficiency in an NFG scenario.

## Description

### TECHNICAL FIELD

The present disclosure relates to a field of communication technology, and specifically to a method for transmitting information, a terminal, a network device, a communication system, and a medium.

### BACKGROUND

A terminal needs to perform radio resource management (RRM) such as mobility measurement on one or more measurement objects (MOs) configured by a network device, report a measurement result to a network for the network device to determine a current communication status of the terminal, and further perform mobility management on the terminal. The network device may configure a measurement gap (MG) for the terminal, so that the terminal may measure inter-frequency neighboring cells or inter-system neighboring cells.

### SUMMARY

In a scenario involving a needforgap (NFG), there is a lack of definition for terminal-related capabilities or behaviors.

The present disclosure provides a method for transmitting information, a terminal, a network device, a communication system, and a medium.

According to a first aspect, embodiments of the present disclosure provide a method for sending information, including: sending, by a terminal, first information, in which the first information indicates whether first measurement requires interruption, the first measurement is measurement on a first measurement object (MO), and the first measurement is measurement when an NFG is that no gap is needed; and determining the first MO.

In the method of the present disclosure, the terminal sends the first information to the network device to report whether the interruption is needed in a scenario where the NFG is that no gap is needed, so that the network device may learn a capability of the terminal, facilitating the terminal to perform reasonable measurement according to its own capability, thus improving measurement efficiency in an NFG scenario.

According to a second aspect, embodiments of the present disclosure provide a method for receiving information, including: receiving, by a network device, first information, in which the first information indicates whether first measurement requires interruption, the first measurement is measurement on a first MO, and the first measurement is measurement when an NFG is that no gap is needed.

According to a third aspect, embodiments of the present disclosure provide a terminal, including: a transceiver module, configured to send first information, in which the first information indicates whether first measurement requires interruption, the first measurement is measurement on a first MO, and the first measurement is measurement when an NFG is that no gap is needed; and a processing module, configured to determine the first MO.

According to a fourth aspect, embodiments of the present disclosure provide a network device, including: a transceiver module, configured to receive first information, in which the first information indicates whether first measurement requires interruption, the first measurement is measurement on a first MO, and the first measurement is measurement when an NFG is that no gap is needed.

According to a fifth aspect, embodiments of the present disclosure provide a terminal, including one or more processors, where the terminal is configured to implement the method according to the first aspect.

According to a sixth aspect, embodiments of the present disclosure provide a network device, including one or more processors, where the network device is configured to implement the method according to the second aspect.

According to a seventh aspect, embodiments of the present disclosure provide a communication system, including a terminal and a network device, in which the terminal is configured to implement the method according to the first aspect, and the network device is configured to implement the method according to the second aspect.

According to an eighth aspect, embodiments of the present disclosure provide a storage medium for storing instructions that, when executed by a communication device, cause the communication device to implement the method according to the first aspect or the second aspect.

### BRIEF DESCRIPTION OF THE DRAWINGS

In order to more clearly illustrate the technical solution in embodiments of the disclosure, the accompanying drawings to be used in embodiments of the disclosure will be described below. The following drawings are only part embodiments of the present disclosure, and do not constitute a limitation on the protection scope of the present disclosure.
FIG. 1 is an exemplary schematic diagram of an architecture of a communication system according to embodiments of the present disclosure.
FIG. 2 is an exemplary schematic diagram of an interaction of a method according to embodiments of the present disclosure.
FIG. 3a is an exemplary flowchart of a method according to embodiments of the present disclosure.
FIG. 3b is an exemplary flowchart of a method according to embodiments of the present disclosure.
FIG. 3c is an exemplary flowchart of a method according to embodiments of the present disclosure.
FIG. 3d is an exemplary flowchart of a method according to embodiments of the present disclosure.
FIG. 4a is an exemplary flowchart of a method according to embodiments of the present disclosure.
FIG. 4b is an exemplary flowchart of a method according to embodiments of the present disclosure.
FIG. 4c is an exemplary flowchart of a method according to embodiments of the present disclosure.
FIG. 4d is an exemplary flowchart of a method according to embodiments of the present disclosure.
FIG. 5a is a block diagram of a terminal according to embodiments of the present disclosure.
FIG. 5b is a block diagram of a network device according to embodiments of the present disclosure.
FIG. 6a is a block diagram of a communication device according to embodiments of the present disclosure.
FIG. 6b is a block diagram of a communication device according to embodiments of the present disclosure.

### DETAILED DESCRIPTION

The present disclosure provides a communication method, a terminal, a network device, a communication system, and a storage medium.

According to a first aspect, the present disclosure provides a method for sending information, including: sending, by a terminal, first information, in which the first information indicates whether first measurement requires interruption, the first measurement is measurement on a first measurement object (MO), and the first measurement is measurement when a needforgap (NFG) is that no gap is needed; and determining, by the terminal, the first MO.

In the above embodiment, the terminal sends the first information to the network device to report whether the interruption is needed in a scenario where the NFG is that no gap is needed, so that the network device may learn a capability of the terminal, facilitating the terminal to perform reasonable measurement according to its own capability, thus improving measurement efficiency in an NFG scenario.

In combination with some embodiments of the first aspect, in some embodiments, the method further includes: sending, by the terminal, capability information, in which the capability information indicates whether the terminal supports a capability to report the first information.

In combination with some embodiments of the first aspect, in some embodiments, the method further includes: receiving, by the terminal, second information, in which the second information indicates the terminal to report the first information at a first frequency.

In the above embodiment, before reporting the first information, the terminal may first report the capability information and receive the second information sent by the network device based on the capability information, thus reporting the first information for a corresponding frequency at an appropriate time in a reasonable manner.

In combination with some embodiments of the first aspect, in some embodiments, the method further includes: receiving, by the terminal, third information, in which the third information indicates a first parameter of the first MO, and the first parameter indicates a period for the terminal to perform measurement on the first MO.

In the above embodiment, the terminal receives the third information sent by the network device to learn the first parameter indicated by the network device, so that the terminal may perform measurement at an appropriate time or within an appropriate time interval.

In combination with some embodiments of the first aspect, in some embodiments, the first MO includes at least one of: an MO for which the NFG is that no gap is needed; or an MO for which the NFG is that no gap but interruption is needed.

In the above embodiment, according to whether the interruption is needed in a scenario where the NFG is that no gap is needed, the terminal may apply the first parameter during a measurement process of a corresponding MO.

In combination with some embodiments of the first aspect, in some embodiments, a carrier specific scaling factor (CSSF) corresponding to the MO for which the NFG is that no gap is needed is defined by a protocol.

In the above embodiment, the scaling factor is defined by the protocol, so that the terminal may adjust measurement periods for different MOs using the scaling factor.

In combination with some embodiments of the first aspect, in some embodiments, a value of the CSSF is one of: a number of MOs for which the NFG is that no gap is needed; or a number of MOs for which the NFG is that no gap but interruption is needed.

In the above embodiment, according to whether the interruption is needed in a scenario where the NFG is that no gap is needed, the terminal may apply the CSSF during a measurement process of a corresponding MO.

In combination with some embodiments of the first aspect, in some embodiments, a first period T corresponding to the first measurement satisfies: T = a number of sampling points * first parameter * CSSF, in which the first period includes a time period for primary synchronization signal (PSS) detection or secondary synchronization signal (SSS) detection, a time period for time index detection, and a measurement period defined by a protocol, and in which the terminal supports that the NFG is that no gap is needed, or the terminal supports that the NFG is that no measurement gap (MG) but interruption is needed.

In the above embodiment, the terminal may determine the first period for performing measurement according to the first parameter and the CSSF, so that the terminal may perform the measurement reasonably in an NFG scenario.

In combination with some embodiments of the first aspect, in some embodiments, the first information further indicates whether the terminal supports a first capability for simultaneous measurement on different radio frequency (RF) chains.

In the above embodiment, in the first information sent by the terminal to the network device, whether the first capability is supported is indicated, so that the network device may perform a reasonable operation based on knowledge of a capability of the terminal.

In combination with some embodiments of the first aspect, in some embodiments, the first parameter is applicable to an NFG being that no MG is needed, in which the terminal does not support the first capability; or, the first parameter is applicable to the NFG being that no MG but interruption is needed, in which the terminal supports the first capability.

In the above embodiment, according to whether the terminal supports the first capability, the terminal may adopt a reasonable method for measurement.

According to a second aspect, the present disclosure provides a method for receiving information, including: receiving, by a network device, first information, in which the first information indicates whether first measurement requires interruption, the first measurement is measurement on a first MO, and the first measurement is measurement when an NFG is that no gap is needed.

In the above embodiment, the network device receives the first information sent by the terminal to learn whether the interruption is needed in a scenario where the NFG is that no gap is needed, facilitating the terminal to perform reasonable measurement according to its own capability, thus improving measurement efficiency in an NFG scenario.

In combination with some embodiments of the second aspect, in some embodiments, the method further includes: receiving, by the network device, capability information, in which the capability information indicates whether a terminal supports a capability to report the first information.

In combination with some embodiments of the second aspect, in some embodiments, the method further includes: sending, by the network device, second information, in which the second information indicates the terminal to report the first information at a first frequency.

In combination with some embodiments of the second aspect, in some embodiments, the method further includes: sending, by the network device, third information, in which the third information indicates a first parameter of the first MO, and the first parameter indicates a period for the terminal to perform measurement on the first MO.

In combination with some embodiments of the second aspect, in some embodiments, the first MO includes at least one of: an MO for which the NFG is that no gap is needed; or an MO for which the NFG is that no gap but interruption is needed.

In combination with some embodiments of the second aspect, in some embodiments, a CSSF corresponding to the MO for which the NFG is that no gap is needed is defined by a protocol.

In combination with some embodiments of the second aspect, in some embodiments, a value of the CSSF is one of: a number of MOs for which the NFG is that no gap is needed; or a number of MOs for which the NFG is that no gap but interruption is needed.

In combination with some embodiments of the second aspect, in some embodiments, a first period T of the first measurement satisfies: T = a number of sampling points * first parameter * CSSF, in which the first period includes a time period for PSS detection or SSS detection, a time period for time index detection, and a measurement period defined by a protocol, and in which the terminal supports that the NFG is that no gap is needed, or the terminal supports that the NFG is that no MG but interruption is needed.

In combination with some embodiments of the second aspect, in some embodiments, the first information further indicates whether the terminal supports a first capability for simultaneous measurement on different RF chains.

In combination with some embodiments of the second aspect, in some embodiments, the first parameter is applicable to an NFG being that no MG is needed, in which the terminal does not support the first capability; or, the first parameter is applicable to an NFG being that no MG but interruption is needed, in which the terminal supports the first capability.

According to a third aspect, embodiments of the present disclosure provide a terminal, including: a transceiver module, configured to send first information, in which the first information indicates whether first measurement requires interruption, the first measurement is measurement on a first MO, and the first measurement is measurement when an NFG is that no gap is needed; and a processing module, configured to determine the first MO.

According to a fourth aspect, embodiments of the present disclosure provide a network device, including: a transceiver module, configured to receive first information, in which the first information indicates whether first measurement requires interruption, the first measurement is measurement on a first MO, and the first measurement is measurement when an NFG is that no gap is needed.

According to a fifth aspect, the present disclosure provides a terminal, including one or more processors, where the terminal is configured to implement the method according to the first aspect.

According to a sixth aspect, the present disclosure provides a network device, including one or more processors, where the terminal is configured to implement the method according to the second aspect.

According to a seventh aspect, the present disclosure provides a communication system, including a terminal and a network device, in which the terminal is configured to implement the method according to the first aspect, and the network device is configured to implement the method according to the second aspect.

According to an eighth aspect, the present disclosure provides a storage medium for storing instructions that, when executed by a communication device, cause the communication device to implement the method according to the first aspect or the second aspect.

According to a ninth aspect, embodiments of the present disclosure provide a program product that, when executed by a communication device, cause the communication device to implement the method described by optional implementations according to the first aspect and the second aspect.

According to a tenth aspect, embodiments of the present disclosure provide a computer program that, when executed on a computer, causes the computer to implement the method described by optional implementations according to the first aspect and the second aspect.

According to an eleventh aspect, embodiments of the present disclosure provide a chip or a chip system. The chip or chip system includes a processing circuit, configured to implement the method described by optional implementations according to the first aspect and the second aspect.

It may be understood that the terminal, the network device, the communication system, the storage medium, the program product, the computer program, the chip or the chip system are all configured to implement the method proposed in embodiments of the present disclosure. Therefore, for beneficial effects they may achieve, reference may be made to beneficial effects in corresponding methods, which will not be repeated here.

Embodiments of the present disclosure are not exhaustive and only serve as illustrations of some embodiments, but not as specific limitations to the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case, A, in another case, B", and "in response to a case, A, in response to another case, B" in the present disclosure, depending on situations, may include at least one of following solutions: performing A in some embodiments (performing A independently of B); performing B in some embodiments (performing B independently of A); selecting one of A or B for execution in some embodiments (selectively performing A or B); and performing A and B in some embodiments (performing both A and B). The similar principle applies when there are more branches such as A, B, C, etc.

In some embodiments, expressions such as "A or B", depending on situations, may include following technical solutions: performing A in some embodiments (performing A independently of B); performing B in some embodiments (performing B independently of A); and selecting one of A or B for execution in some embodiments (selectively performing A or B). The similar principle applies when there are more branches such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "element", ordinal numbers before the "element" in "first element" and "second element" do not limit a position or a sequence between elements. "First" and "second" do not limit whether modified "elements" are in a same message, nor do an order of the "first element" and the "second element." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects described by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "not smaller than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" and "device" may be interpreted as either a physical apparatus or a virtual apparatus. Names are not limited to those recorded in embodiments. In some cases, "apparatus" and "device" may be understood as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, and the like.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

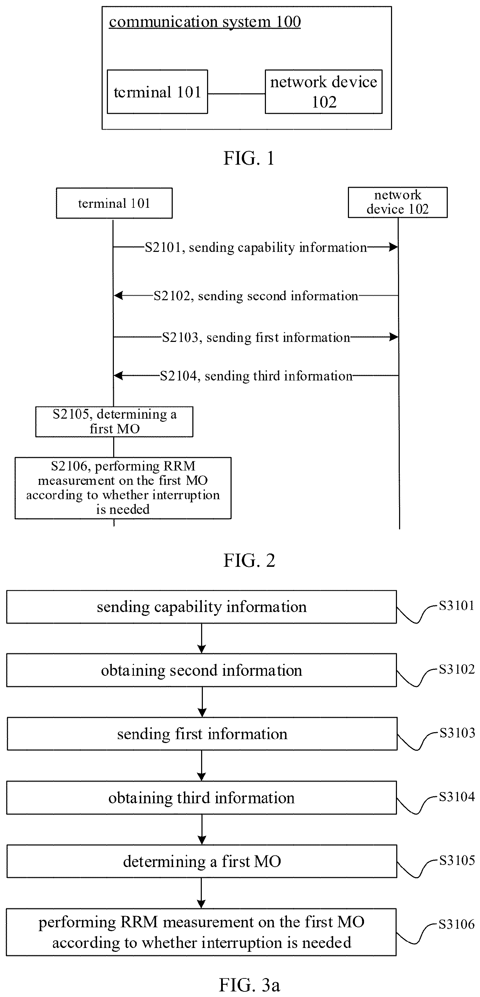

FIG. 1 is a schematic diagram of an architecture of a communication system according to embodiments of the present disclosure.

As shown in FIG. 1, the communication system 100 includes a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited thereto.

In some embodiments, the network device 102 may include at least one of an access network device or a core network device.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited thereto.

In some embodiments, the technical solution of the present disclosure may be applied to an architecture of the Open RAN. In this case, an interface between access network devices or within the access network device in embodiments of the present disclosure may become an internal interface of the Open RAN. Processes and information interaction among internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited thereto.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system in embodiments of the present disclosure is intended to illustrate the technical solution in embodiments of the present disclosure more clearly, and does not constitute a limitation on the technical solution in embodiments of the present disclosure. Those skilled in the art may know that the technical solution in embodiments of the present disclosure is equally applicable to similar technical problems, with the evolution of a system architecture and the emergence of a new service scene.

Following embodiments of the present disclosure may be applied to the communication system 100 shown in FIG. 1, or part of entities, but is not limited thereto.

Entities in FIG. 1 are illustrative. The communication system may include all or part of the entities in FIG. 1, or may include other entities not shown in FIG. 1. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them and extended from the above, etc. In addition, a combination of a plurality of systems (e.g., a combination of LTE or LTE-A with 5G) may also be applied.

Since movement of a UE may cause changes in parameters such as a channel condition, in order to support mobility of the UE, the network device may configure measurement configuration information via a signaling such as RRC Reconfiguration or RRC Resume. The measurement configuration information indicates one or more of measurement objects (MOs), reporting configurations, measurement identities, quantity configurations, and measurement gaps. Optionally, the MOs correspond to a list of objects that the UE needs to measure. Optionally, each MO may be configured with one or more reporting configurations. Optionally, one measurement identity may associate one MO with one reporting configuration; a plurality of measurement identities may be used to associate a plurality of MOs with one reporting configuration, or associate a plurality of reporting configurations with one MO. The measurement identity may be included in a measurement report. Optionally, the quantity configuration is used for a measurement filtering configuration for measurement events and related reports. Optionally, the measurement gap, also called a measurement interval, is a time interval during which the UE performs measurement.

After the UE performs the measurement and obtains a measurement result, the UE may perform an operation related to UE mobility such as a cell selection or a cell reselection; or, after the UE performs the measurement and obtains a measurement result, the UE may report the measurement result to the network device 102 to assist the network device 102 in performing an operation related to UE mobility such as a handover decision.

The measurement may be divided into intra-frequency measurement, inter-frequency measurement, and inter-system measurement.

In some embodiments of the present disclosure, an MO configured by the network device 102 corresponds to a signal from a neighboring cell to be measured or a signal from other carriers. The terminal 101 operates at one frequency point at a certain moment, and the terminal 101 may generally measure MOs centered around that frequency point at that moment. For example, the terminal 101 may measure the signal from the neighboring cell that is on a same frequency as a serving cell, and meanwhile still receive and send data in the serving cell during the measurement. During a process of performing the inter-frequency measurement or the inter-system measurement, the terminal 101 needs to adjust an RF module to configure a frequency, which will suspend communication with the serving cell, including suspending data reception or data transmission with the serving cell. After the measurement is completed, a connection with the serving cell is resumed. This time interval during which the terminal performs the measurement is called measurement gap.

In embodiments of the present disclosure, the network device 102 may configure a plurality of MOs for the terminal 101. There may be a plurality of MOs that require measurement based on the MG, and there may be a plurality of MOs competing for a same MG.

In embodiments of the present disclosure, a measurement requirement is provided for a UE that supports an NFG capability.

**FIG.** 2 is a schematic diagram of an interaction of a method for transmitting information according to embodiments of the present disclosure. As shown in FIG. 2, embodiments of the present disclosure relate to a method for transmitting information. The method includes following steps at S2101 to S2106.

At S2101, the terminal 101 sends capability information to the network device 102.

In some embodiments, the capability information indicates whether the terminal 101 supports a capability to report the first information. The first information indicates whether first measurement requires interruption, the first measurement is measurement on a first MO, and the first measurement is measurement when an NFG is that no gap is needed.

Optionally, the capability may be denoted as an nr-NeedForInterruptionReport capability.

In some embodiments, the network device 102 receives the capability information.

In some embodiments, the UE may send the capability information to the network device 102 after a random access.

In some embodiments, after the network device sends UECapabilityEnquiry to the UE, the UE sends the capability information.

Optionally, the network device 102 may also obtain or receive the capability information from entities other than the terminal.

It may be understood that embodiments of the present disclosure may be performed in a scenario where the terminal 101 supports a capability to report the first information.

At S2102, the network device 102 sends second information to the terminal 101.

In some embodiments, the second information indicates the terminal to report the first information at a first frequency.

In some embodiments, the first frequency corresponds to a frequency or a frequency band for which the network device 102 requests gap interruption information, or the first frequency includes a target frequency or a target frequency band corresponding to the measurement. For example, the network device 102 requests the terminal to report interruption requirement information at the first frequency. In an NFG scenario, there are two situations: the NFG is that a gap is needed, and the NFG is that no gap is needed; and in a situation is that no gap is needed, there are two possibilities: interruption is needed (no-gap-with-interruption), and no interruption is needed (no-gap-no-interruption).

Optionally, the terminal 101 may report via the first information whether the interruption is needed when the NFG is that no gap is needed, that is, whether no-gap-with-interruption or no-gap-no-interruption is supported.

In some embodiments, the second information is configuration information or indication information.

In some embodiments, the network device 102 sends the second information by sending a radio resource control (RRC) message. The RRC message may be, for example, an RRCReconfiguration message or an RRCResume message, and the second information may be one or more elements in RRC information. For example, the second information includes a first element and a second element in the RRC message. The first element indicates that NFG is configured, and the second element indicates interruption requirement information at the first frequency requested (interruption requirement information of NR target bands). The first frequency refers to a target band or a frequency requested by the network device. When the network device configures needForGapsConfigNR, the network device enables the terminal to report an interruption requirement. Optionally, take the network device 102 sending the second information via the RRCReconfiguration message as an example, that is, configuring a requirement indication for NeedForGap reporting information. For example, the first element includes needForGapsConfigNR, and the second element includes needF or InterruptionConfigNR.

In some embodiments, the terminal 101 receives the second information.

At S2103, the terminal 101 sends first information to the network device 102.

In some embodiments, the first information indicates whether first measurement requires interruption, the first measurement is measurement on a first MO, and the first measurement is measurement when an NFG is that no gap is needed.

Optionally, the first information may indicate whether the interruption is needed in a scenario where the NFG is that no gap is needed under a serving cell or a serving band.

In some embodiments, the first information may be indication information or capability information.

In some embodiments, the terminal 101 sends the first information by sending the RRC message.

In some embodiments, the terminal 101 may send the first information after receiving the second information, for example, after receiving the RRCReconfiguration message.

Optionally, the network device 102 requests the first information at the first frequency via the second information, and the terminal 101 may report the first information corresponding to the serving cell or the serving band according to a serving cell list or a serving band list based on the second information.

Optionally, the terminal 101 sends the first information by sending an RRCReconfigurationComplete message or an RRCResumeComplete message. For example, the first information includes a third element and a fourth element. The third element indicates whether the NFG of the terminal 101 is that a gap is needed or that no gap is needed, and the fourth element indicates interruption requirement information of the terminal 101. For example, taking the terminal 101 sending the second message via RRCReconfigurationComplete message as an example, the third element includes needForGapsInfoNR, and the fourth element includes needForInterruptionInfoNR.

Optionally, the terminal 101 may report the first information dynamically based on frequency points.

Optionally, the first information may be reported by the terminal 101 when a capability to report the first information (nr-NeedForInterruptionReport capability) is supported.

Optionally, the terminal 101 reports measurement gap requirement information of an NR target frequency point via information related to an nr-NeedForGap-Reporting capability, such as the third element, for example, reporting {'gap', 'no gap'}, in which 'gap' corresponds to that a gap is needed, and 'no gap' corresponds to that no gap is needed.

The terminal 101 reports whether the interruption is needed in a 'no gap' scenario via information related to the nr-NeedForInterruptionReport capability, such as the fourth element, for example, reporting {no-gap-no-interruption, no-gap-with-interruption}, in which no-gap-no-interruption corresponds to that no interruption is needed, and no-gap-with-interruption corresponds to that interruption is needed.

Optionally, the nr-NeedForInterruptionReport capability may be reported based on the nr-NeedForGap-Reporting capability. For example, when the terminal 101 supports reporting the nr-NeedForGap-Reporting capability, whether the terminal 101 supports the nr-NeedForInterruptionReport capability is then determined.

In some embodiments, the information related to the nr-NeedForInterruptionReport capability, such as the first information, may also include corresponding MO information, such as serving cell or band information corresponding to the MO.

For example, the first information further includes at least one of a serving cells list or a band list, with related elements as follows:
NeedForInterruptionIntraFreqList-r18 ::= SEQUENCE (SIZE (1.. maxNrofServingCells)) OF NeedForInterruptionNR-r18
NeedForInterruptionBandListNR-r18 ::= SEQUENCE (SIZE (1..maxBands)) OF NeedForInterruptionNR-r18.

In some embodiments, the first information further indicates whether the terminal supports a first capability for simultaneous measurement on different RF chains.

Optionally, whether the terminal 101 supports the first capability may be indicated by 1 bit. When a value of the 1 bit is 1, it indicates that the first capability is supported; and when the value is 0, it indicates that the first capability is not supported.

Optionally, an enumeration method may be used to indicate whether the terminal 101 supports the first capability. When the terminal reports "support", it indicates that the first capability is supported.

Optionally, the terminal 101 includes a first RF chain and a second RF chain. When the terminal 101 supports the first capability, the terminal 101 may perform the measurement on the first RF chain and the second RF chain respectively. The first RF chain may be a primary RF chain or an active RF chain, and the second RF chain may be a spare RF chain.

The spare RF chain may be used for measurement of a neighboring cell (an intra-frequency neighboring cell, an inter-frequency neighboring cell, an inter-system neighboring cell).

In some embodiments, the network device 102 receives the first information.

At S2104, the network device 102 sends third information to the terminal 101.

In some embodiments, the third information indicates a first parameter of the first MO, and the first parameter indicates a period for the terminal to perform measurement on the first MO.

Optionally, the terminal 101 may perform the measurement on the first MO in a period indicated by the first parameter according to the first parameter. The first parameter is used for a specific measurement object, such as the first MO under the NFG, so the first parameter may serve as a period for measuring a specific measurement object.

Optionally, the first parameter indicates a period of measurement occasions, measurement time intervals, or measurement windows of the first MO, that is, a period of occasions or time intervals for the terminal to perform the measurement.

In some embodiments, a name of the first parameter may be measCycleNFG.

Optionally, the first parameter has a longer period value, for example, a value of the first parameter may refer to: {160, 256, 320, 512, 640, 1024, 1280} ms.

In some embodiments, the network device 102 may send the third information via an RRC message, for example, sending the third information via the measurement configuration information.

Optionally, the network device 102 configures the first parameter via a MeasObject element in the RRC message.

In some embodiments, the network device 102 may send the second information and the third information in a same RRC message, or send the second information and the third information separately.

Optionally, the third information is indication information or configuration information.

In some embodiments, the third information further includes one or more first MOs configured by the network device 102.

Optionally, the network device 102 configures first MOs based on the capability information and the first information reported by the terminal 101.

In some embodiments, the terminal 101 receives the third information.

At S2105, the terminal 101 determines a first MO.

In some embodiments, the first MO may be configured by the network device 102, and the terminal 101 determines or learns about the first MO according to configuration of the network device 102. For example, the network device 102 configures the first MO via the third information or other RRC information.

In some embodiments, the first MO includes at least one of: an MO for which the NFG is that no gap is needed; or an MO for which the NFG is that no gap but interruption is needed.

It may be understood that the first MO here is merely an example and is not limited to above two types. For example, the first MO may also be other MOs configured by the network device 102.

Optionally, in a scenario where the NFG is that no gap is needed, two cases are included: no interruption is needed (no-gap-no-interruption) and an interruption is needed (no-gap-with-interruption). Therefore, the first MO may be: an MO corresponding to a serving cell or band of no-gap-no-interruption, and an MO corresponding to a serving cell or band of no-gap-with-interruption.

Optionally, the first MO may also be the MO corresponding to the serving cell or band of no-gap-with-interruption.

In some embodiments, a CSSF corresponding to the MO for which the NFG is that no gap is needed may also be defined by a protocol.

Optionally, the CSSF may be a CSSF corresponding to a specific measurement object (MO#i).

Optionally, the CSSF may be denoted as CSSF_{NFG,i}.

In some embodiments, a value of the CSSF is one of: a number of MOs for which the NFG is that no gap is needed; or a number of MOs for which the NFG is that no gap but interruption is needed.

Optionally, CSSF_{NFG,i} equals to a sum of the number of MOs corresponding to the serving cell or band of no-gap-no-interruption and the number of MOs corresponding to the serving cell or band of no-gap-with-interruption.

Optionally, CSSF_{NFG,i} equals to the number of MOs corresponding to the serving cell or band of no-gap-with-interruption.

In some embodiments, CSSF_{NFG,i} may also be configured by the network device 102.

At S2106, the terminal 101 performs radio resource management (RRM) measurement on the first MO according to whether interruption is needed.

In some embodiments, in a scenario where the NFG is that no gap is needed, following two cases are included: the terminal 101 needs interruption, i.e., no-gap-with-interruption, and the terminal 101 does not need interruption, i.e., no-gap-no-interruption.

In some embodiments, the terminal 101 may perform RRM measurement in different periods according to whether the interruption is needed.

In some embodiments, a first period T of the RRM measurement satisfies: T = a number of sampling points * first parameter * CSSF, in which the first period includes a time period for PSS detection or SSS detection, a time period for time index detection, and a measurement period defined by a protocol, and in which the terminal supports that the NFG is that no gap is needed, or the terminal supports that the NFG is that no MG but interruption is needed.

Optionally, the first parameter is measCycleNFG, and the CSSF is CSSF_{NFG,i}.

It should be noted that, in combination with a description of the above embodiments, a value of CSSF_{NFG,i} in the following two examples may be defined.

In a first example, the first MO is an MO of no-gap-with-interruption. The first MO is a neighboring cell that is intra-frequency or inter-frequency with the serving cell or the serving band. The first parameter measCycleNFG is applicable to the first MO. In this example, CSSF_{NFG,i} is defined to be equal to the number of MOs corresponding to the serving cell or the serving band of no-gap-with-interruption, i.e., a number of first MOs.

In this example, the first period T of the RRM measurement under no-gap-with-interruption satisfies: T = a number of sampling points * measCycleNFG * CSSF_{NFG,i}. That is, when the terminal 101 supports no-gap-with-interruption, the RRM measurement of the first MO is performed according to the first period T. For example, the terminal 101 performs one or more times of sampling measurement on the first MO within each first period T, and obtains a measurement result of the first MO by processing the one or more measurement sample results. For example, within each first period T, sampling measurement of the first MO may be performed a number of times, wherein the number of times is equal to a number of sampling points.

In this example, for the period of the RRM measurement under no-gap-no-interruption, reference may be made to a measurement requirement of no gap in a relevant protocol.

In a second example, the first MO is an MO of no gap. The first MO is a neighboring cell that is intra-frequency or inter-frequency with the serving cell or the serving band, for example, including an MO corresponding to a serving cell or a serving band of no-gap-no-interruption, and an MO corresponding to a serving cell or a serving band of no-gap-with-interruption. In this example, CSSF_{NFG,i} is defined to be equal to a sum of the number of MOs corresponding to the serving cell or the serving band of no-gap-no-interruption and the number of MOs corresponding to the serving cell or the serving band of no-gap-with-interruption, i.e., a total number of first MOs.

In this example, the first period T of the RRM measurement under no-gap-with-interruption and the first period T of the RRM measurement under no-gap-no-interruption both satisfy: a number of sampling points * measCycleNFG * CSSF_{NFG,i}. That is, when the terminal 101 supports no gap, the RRM measurement on the first MO is performed according to the first period T.

In some embodiments, the first parameter is applicable to an NFG being that no MG is needed, in which the terminal does not support the first capability; and the first parameter is applicable to the NFG being that no MG but interruption is needed, in which the terminal supports the first capability.

Optionally, when the terminal 101 does not support the first capability, that is, does not support simultaneous measurement on a primary RF chain and a spare RF chain, the terminal 101 may perform the RRM measurement on the first MO according to the period in the second example.

Optionally, when the terminal 101 supports the first capability, that is, supports simultaneous measurement on a primary RF chain and a spare RF chain, the terminal 101 may perform the RRM measurement on the first MO according to the period in the first example.

In some embodiments, names of information are not limited to names described in embodiments. Terms such as "information", "message", "signal", "signaling", "report", "configuration", "indication", "instruction", "command", "channel", "parameter", "domain", "element", etc., may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "emit", "report", "deliver", "transmit", "bidirectional transmission", "send and/or receive" may be used interchangeably.

In some embodiments, terms such as "uplink", "physical uplink", etc. may be used interchangeably; terms such as "downlink", "physical downlink", etc. may be used interchangeably; and terms such as "sidelink", "sidelink communication", "direct link", "direct communication", "direct link communication", etc. may be used interchangeably.

In some embodiments, terms such as "downlink control information (DCI)", "downlink (DL) assignment", "DL DCI", "uplink (UL) grant", "UL DCI", etc. may be used interchangeably.

In some embodiments, terms such as "physical downlink shared channel (PDSCH)", "DL data", etc. may be used interchangeably; and terms such as "physical uplink shared channel (PUSCH)", "UL data", etc. may be used interchangeably

In some embodiments, terms such as "component carrier (CC)", "cell", "frequency carrier", "carrier frequency", etc. may be used interchangeably.

In some embodiments, terms such as "certain", "preseted", "preset", "set", "indicated", "a/an", "any", "first", etc. may be used interchangeably. "Certain A", "preseted A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

In some embodiments, judging or determining may be performed using a value represented by 1 bit (0 or 1), or by a true value or a false value represented by true or false (boolean value), or by numerical comparison (e.g., comparison with a predetermined value), which is not limited thereto.

In some embodiments, "does not expect to receive" may be interpreted as not receiving on a time-domain resource and/or a frequency-domain resource, or as not performing subsequent processing on data after receiving the data; and "does not expect to send" may be interpreted as not sending, or as sending but not expecting a receiver to respond to content that is sent.

The communication method involved in embodiments of the present disclosure may include at least one of S2101 to S2106. For example, S2104 may be implemented as an independent embodiment, a combination of S2103 and S2105 may be implemented as an independent embodiment, a combination of S2102, S2103, and S2105 may be implemented as an independent embodiment, but it is not limited thereto.

In some embodiments, S2101, S2102, S2104, and S2106 are optional. In different embodiments, one or more of these steps may be omitted or substituted.

In some embodiments, an order of S2103 and S2104 may be exchanged.

In some embodiments, reference may be made to other optional implementations recorded before or after the description corresponding to FIG. 2.

FIG. 3a is a schematic diagram of a method for sending information according to embodiments of the present disclosure. As shown in FIG. 3a, embodiments of the present disclosure relate to a method for sending information, performed by a terminal 101. The method includes following steps at S3101 to S3106.

At S3101, the terminal 101 sends capability information.

In some embodiments, for implementations of S3101, reference may be made to relevant implementations of S2101, which will not be repeated here.

In some embodiments, the terminal 101 may send the capability information to the network device 102, or send the capability information to other entities.

At S3102, the terminal 101 obtains second information.

In some embodiments, for implementations of S3102, reference may be made to relevant implementations of S2102, which will not be repeated here.

In some embodiments, the terminal 101 may obtain or receive the second information from the network device 102, or receive the second information from other entities.

At S3103, the terminal 101 sends first information.

In some embodiments, for implementations of S3103, reference may be made to relevant implementations of S2103, which will not be repeated here.

In some embodiments, the terminal 101 may send the first information to the network device 102, or send the first information to other entities.

At S3104, the terminal 101 obtains third information.

In some embodiments, for implementations of S3104, reference may be made to relevant implementations of S2104, which will not be repeated here.

In some embodiments, the terminal 101 may obtain or receive the third information from the network device 102, or receive the third information from other entities.

At S3105, the terminal 101 determines a first MO.

In some embodiments, for implementations of S3105, reference may be made to relevant implementations of S2105, which will not be repeated here.

At S3106, the terminal 101 performs RRM measurement on the first MO according to whether interruption is needed.

In some embodiments, for implementations of S3106, reference may be made to relevant implementations of S2106, which will not be repeated here.

The communication method involved in embodiments of the present disclosure may include at least one of S3101 to S3106. For example, S3104 may be implemented as an independent embodiment, a combination of S3104 and S3105 may be implemented as an independent embodiment, a combination of S3102, S3103, and S3105 may be implemented as an independent embodiment, but it is not limited thereto.

In some embodiments, S3102, S3104, and S3106 are optional. In different embodiments, one or more of these steps may be omitted or substituted.

In some embodiments, an order of S3103 and S3104 may be exchanged.

In some embodiments, reference may be made to other optional implementations recorded before or after the description corresponding to FIG. 3a.

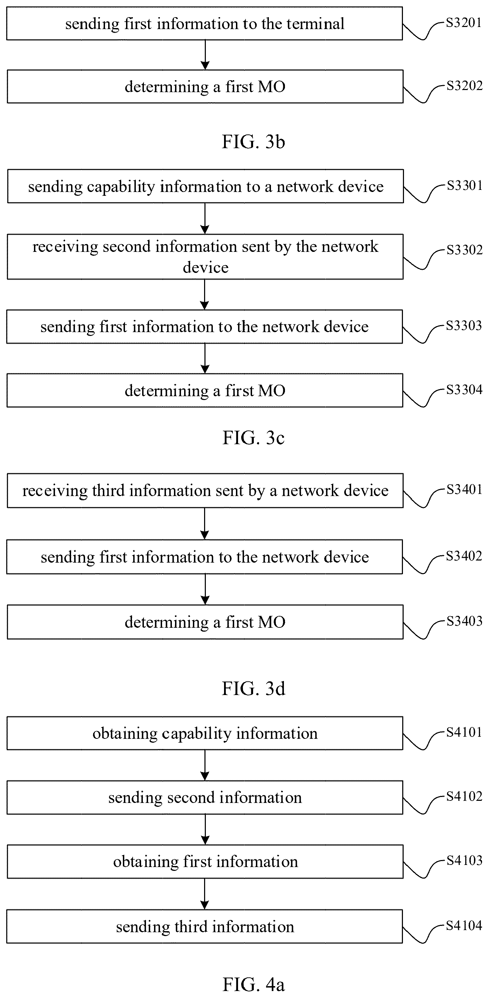

FIG. 3b is a schematic diagram of a method for sending information according to embodiments of the present disclosure. As shown in FIG. 3b, embodiments of the present disclosure relate to a method for sending information, performed by a terminal 101. The method includes following steps at S3201 to S3202.

At S3201, the terminal 101 sends first information to a network device 102.

In some embodiments, for implementations of S3201, reference may be made to relevant implementations of S2103 and S3103, which will not be repeated here.

In some embodiments, the first information indicates whether first measurement requires interruption, the first measurement is measurement on a first MO, and the first measurement is measurement when an NFG is that no gap is needed.

In some embodiments, the terminal 101 may send the first information after receiving second information from the network device 102.

In some embodiments, the terminal 101 may also receive other configurations or indications sent by the network device 102, such as a first parameter of a specific measurement object indicated by the network device 102.

In some embodiments, a CSSF of the specific measurement object may be defined by a protocol.

In some embodiments, the terminal 101 may determine a first period for measuring a corresponding measurement object based on whether interruption is needed, the first parameter, and the CSSF, and perform measurement according to the first period.

For example, a first period T1 of the RRM measurement satisfies: T1 = a number of sampling points * first parameter * CSSF.

In some embodiments, the first information further indicates whether the terminal supports a first capability for simultaneous measurement on different RF chains.

A value of a corresponding first period is determined according to whether the terminal 101 supports the first capability.

In some embodiments, the first parameter is applicable to an NFG being that no MG is needed, in which the terminal does not support the first capability; or, the first parameter is applicable to the NFG being that no MG but interruption is needed, in which the terminal supports the first capability.

At S3202, the terminal 101 determines a first MO.

In some embodiments, for implementations of S3202, reference may be made to relevant implementations of S2105 and S3105, which will not be repeated here.

In some embodiments, reference may be made to other optional implementations recorded before or after the description corresponding to FIG. 3b.

FIG. 3c is a schematic diagram of a method for sending information according to embodiments of the present disclosure. As shown in FIG. 3c, embodiments of the present disclosure relate to a method for sending information, performed by a terminal 101. The method includes following steps at S3301 to S3304.

At S3301, the terminal 101 sends capability information to a network device 102.

In some embodiments, for implementations of S3301, reference may be made to relevant implementations of S2101 and S3101, which will not be repeated here.

In some embodiments, the capability information indicates whether the terminal supports a capability to report the first information.

At S3302, the terminal 101 receives second information sent by the network device 102.

In some embodiments, for implementations of S3302, reference may be made to relevant implementations of S2102 and S3102, which will not be repeated here.

In some embodiments, the second information indicates the terminal to report whether interruption is needed in a scenario where the NFG is that no gap is needed at a first frequency.

At S3303, the terminal 101 sends first information to the network device 102.

In some embodiments, for implementations of S3303, reference may be made to relevant implementations of S2103 and S3103, which will not be repeated here.

At S3304, the terminal 101 determines a first MO.

In some embodiments, for implementations of S3304, reference may be made to relevant implementations of S2105 and S3105, which will not be repeated here.

In some embodiments, reference may be made to other optional implementations recorded before or after the description corresponding to FIG. 3c.

FIG. 3d is a schematic diagram of a method for sending information according to embodiments of the present disclosure. As shown in FIG. 3d, embodiments of the present disclosure relate to a method for sending information, performed by a terminal 101. The method includes following steps at S3401 to S3403.

At S3401, the terminal 101 receives third information sent by a network device 102.

In some embodiments, for implementations of S3401, reference may be made to relevant implementations of S2104 and S3104, which will not be repeated here.

In some embodiments, the third information indicates a first parameter of a first MO.

In some embodiments, the first MO includes one of: an MO for which the NFG is that no gap is needed, configured by the network device; or an MO for which the NFG is that no gap but interruption is needed, configured by the network device.

At S3402, the terminal 101 sends first information to the network device 102.

In some embodiments, for implementations of S3402, reference may be made to relevant implementations of S2103 and S3103, which will not be repeated here.

At S3403, the terminal 101 determines a first MO.

In some embodiments, for implementations of S3403, reference may be made to relevant implementations of S2105 and S3105, which will not be repeated here.

In some embodiments, reference may be made to other optional implementations recorded before or after the description corresponding to FIG. 3d.

In some embodiments, a CSSF corresponding to the MO for which the NFG is that no gap is needed is defined by a protocol.

In some embodiments, a value of the CSSF is one of: a number of MOs for which the NFG is that no gap is needed; or a number of MOs for which the NFG is that no gap but interruption is needed.

In some embodiments, a first period T of the RRM measurement satisfies: T = a number of sampling points * first parameter * CSSF, in which the first period includes a time period for PSS detection or SSS detection, a time period for time index detection, and a measurement period defined by a protocol, and in which the terminal supports that the NFG is that no gap is needed, or the terminal supports that the NFG is that no MG but interruption is needed.

In this embodiment, the terminal 101 performs measurement according to the first period.

In some embodiments, when the terminal does not support a first capability, the first parameter is applicable to an NFG being that no MG is needed, and the terminal performs measurement according to a manner of the NFG being that no MG is needed, referring to the above second example; or, when the terminal supports a first capability, the first parameter is applicable to an NFG being that no MG but interruption is needed, and the terminal performs measurement according to a manner requiring interruption in a scenario where the NFG is that no MG is needed, referring to the above first example.

FIG. 4a is a schematic diagram of a method for receiving information according to embodiments of the present disclosure. As shown in FIG. 4a, embodiments of the present disclosure relate to a method for receiving information, performed by a network device 102. The method includes following steps at S4101 to S4104.

At S4101, the network device 102 obtains capability information.

In some embodiments, for implementations of S4101, reference may be made to relevant implementations of S2101, which will not be repeated here.

At S4102, the network device 102 sends second information.

In some embodiments, for implementations of S4102, reference may be made to relevant implementations of S2102, which will not be repeated here.

In some embodiments, the network device 102 may send the second information to the terminal 101, or send the second information to other entities.

At S4103, the network device 102 obtains first information.

In some embodiments, for implementations of S4103, reference may be made to relevant implementations of S2103, which will not be repeated here.

In some embodiments, the network device 102 may obtain or receive the first information from the terminal 101, or receive the first information from other entities.

At S4104, the network device 102 sends third information.

In some embodiments, for implementations of S4104, reference may be made to relevant implementations of S2104, which will not be repeated here.

In some embodiments, the network device 102 may send the third information to the terminal 101, or send the third information to other entities.

The communication method involved in embodiments of the present disclosure may include at least one of S4101 to S4104. For example, S4103 may be implemented as an independent embodiment, and a combination of S4103 and S4104 may be implemented as an independent embodiment, but it is not limited thereto.

In some embodiments, S4101, S4102, and S4104 are optional. In different embodiments, one or more of these steps may be omitted or substituted.

In some embodiments, reference may be made to other optional implementations recorded before or after the description corresponding to FIG. 4a.

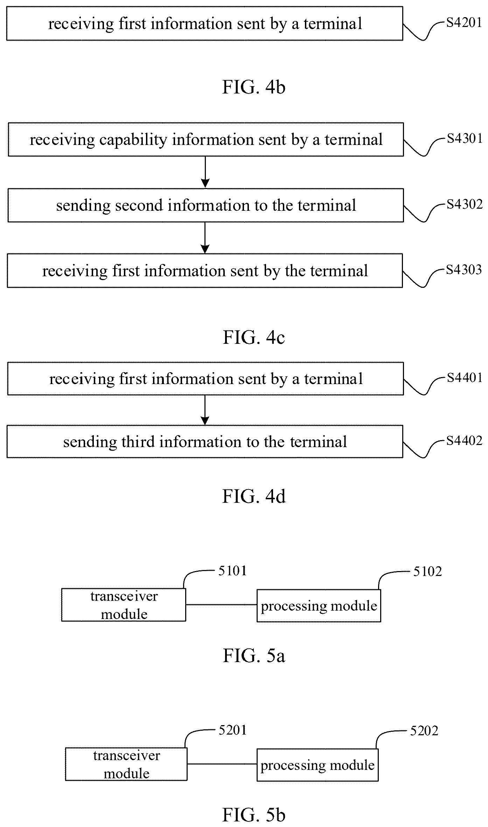

FIG. 4b is a schematic diagram of a method for receiving information according to embodiments of the present disclosure. As shown in FIG. 4b, embodiments of the present disclosure relate to a method for receiving information, performed by a network device 102. The method includes a following step at S4201.

At S4201, the network device 102 receives first information sent by a terminal 101.

In some embodiments, for implementations of S4201, reference may be made to relevant implementations of S2103 and S4103, which will not be repeated here.

In some embodiments, the first information indicates whether first measurement requires interruption, the first measurement is measurement on a first MO, and the first measurement is measurement when an NFG is that no gap is needed.

In some embodiments, the first information further indicates whether the terminal supports a first capability for simultaneous measurement on different RF chains.

In some embodiments, reference may be made to other optional implementations recorded before or after the description corresponding to FIG. 4b.

FIG. 4c is a schematic diagram of a method for receiving information according to embodiments of the present disclosure. As shown in FIG. 4c, embodiments of the present disclosure relate to a method for receiving information, performed by a network device 102. The method includes following steps at S4301 to S4303.

At S4301, the network device 102 receives capability information sent by a terminal 101.

In some embodiments, for implementations of S4301, reference may be made to relevant implementations of S2101 and S4101, which will not be repeated here.

In some embodiments, the capability information indicates whether the terminal supports a capability to report the first information.

At S4302, the network device 102 sends second information to the terminal 101.

In some embodiments, for implementations of S4302, reference may be made to relevant implementations of S2102 and S4102, which will not be repeated here.

In some embodiments, the second information indicates the terminal to report the first information for a first frequency.

At S4303, the network device 102 receives first information sent by the terminal 101.

In some embodiments, for implementations of S4303, reference may be made to relevant implementations of S2105 and S4104, which will not be repeated here.

In some embodiments, reference may be made to other optional implementations recorded before or after the description corresponding to FIG. 4c.

FIG. 4d is a schematic diagram of a method for receiving information according to embodiments of the present disclosure. As shown in FIG. 4d, embodiments of the present disclosure relate to a method for receiving information, performed by a network device 102. The method includes following steps at S4401 to S4402.

At S4401, the network device 102 receives first information sent by a terminal 101.

In some embodiments, for implementations of S4401, reference may be made to relevant implementations of S2103 and S4103, which will not be repeated here.

At S4402, the network device 102 sends third information to the terminal 101.

In some embodiments, for implementations of S4402, reference may be made to relevant implementations of S2104 and S4104, which will not be repeated here.

In some embodiments, the third information indicates a first parameter of a first MO.

In some embodiments, the first MO includes at least one of: an MO for which the NFG is that no gap is needed, configured by the network device; or an MO for which the NFG is that no gap but interruption is needed, configured by the network device.

In some embodiments, reference may be made to other optional implementations recorded before or after the description corresponding to FIG. 4d.

In some embodiments, a CSSF corresponding to the MO for which the NFG is that no gap is needed is defined by a protocol.

In some embodiments, a value of the CSSF is one of: a number of MOs for which the NFG is that no gap is needed, configured by a network; or a number of MOs for which interruption is needed in a scenario where the NFG configured by a network is that no gap is needed.

In some embodiments, a first period T of RRM of the first measurement satisfies: T = a number of sampling points * first parameter * CSSF, in which the first period includes a time period for PSS detection or SSS detection, a time period for time index detection, and a measurement period defined by a protocol, and in which the terminal supports that the NFG is that no gap is needed, or the terminal supports that the NFG is that no MG but interruption is needed.

In some embodiments, the first parameter is applicable to an NFG being that no MG is needed, in which the terminal does not support the first capability; or, the first parameter is applicable to the NFG being that no MG but interruption is needed, in which the terminal supports the first capability.

To facilitate understanding of embodiments of the present disclosure, some specific examples are listed below.

A scenario to which embodiments of the present disclosure are applicable is: a UE supporting an R18 NeedForGap capability, i.e., supporting indication of no-gap-no-interruption and no-gap-with-interruption; and a base station supporting the R18 NeedForGap capability, i.e., supporting sending configuration for the UE to report whether interruption is needed.

### Example 1:

Embodiments of the present disclosure introduce a new measurement period of a specific measurement object, such as measCycleNFG, which defines that the measurement period has a longer subsequent period value, for example, {160, 256, 320, 512, 640, 1024, 1280} ms.

Optionally, the base station may configure this parameter via a MeasObject element in an RRC message.

### Example 2:

Embodiments of the present disclosure introduce a new CSSF, such as CSSF_{NFG,i}, which defines that CSSF_{NFG,i} is for a specific measurement object MO#i and is applicable to MOs associated with NeedForGap -> no gap.

### Example 3:

Whether the UE supports simultaneous measurement on an active RF chain and a spare RF chain is distinguished via a UE capability.

### Example 4:

measCycleNFG is specifically used for a measurement period of an MO corresponding to a serving cell/band for which NeedForGap indicates no-gap-with-interruption; and CSSF_{NFG,i} = a number of MOs corresponding to a serving cell/band reported by the UE as having measurement gap requirement information of no-gap and interruption requirement information of no-gap-with-interruption, that are included in a serving cell/frequency layer.

In this case, an RRM measurement requirement (including a PSS/SSS detection period, an SSB index detection period, and a measurement period) for reporting no-gap-with-interruption is: a number of sampling points * measCycleNFG * CSSF_{NFG,i}.

An RRM measurement requirement (including a PSS/SSS detection period, an SSB index detection period, and a measurement period) for reporting no-gap-no-interruption is: reusing a measurement requirement that no measurement gap is needed in sections 9.2 and 9.3 of 38.133.

### Example 5:

measCycleNFG is specifically used for a measurement period of an MO corresponding to a serving cell/band for which NeedForGap indicates no-gap (including no-gap-no-interruption and no-gap-with-interruption); and CSSF_{NFG,i} = a number of MOs corresponding to a serving cell/band reported by the UE as having measurement gap requirement information of no-gap, that are included in a serving cell/frequency layer.

In this case, an RRM measurement requirement (including a PSS/SSS detection period, an SSB index detection period, and a measurement period) for reporting both no-gap-with-interruption and no-gap-no-interruption is: a number of sampling points * measCycleNFG * CSSF_{NFG,i}.

### Example 6:

Example 4 and Example 5 are distinguished based on the UE capability. For example, a UE supporting a capability for simultaneous measurement on an active RF chain and a spare RF chain may execute Example 4; and a UE not supporting a capability for simultaneous measurement on an active RF chain and a spare RF chain executes Example 5.

Embodiments of the present disclosure also provide an apparatus for implementing any one of the above methods. For example, an apparatus is provided, including units or modules for implementing steps performed by the terminal in any one of the above methods. For another example, another apparatus is provided, including units or modules for implementing steps performed by the network device (e.g., an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 5a is a block diagram of a terminal according to embodiments of the present disclosure. As shown in FIG. 5a, the terminal may include at least one of: a transceiver module 5101 or a processing module 5102. In some embodiments, the transceiver module 5101 is configured to send first information, in which the first information indicates whether first measurement requires interruption, the first measurement is measurement on a first MO, and the first measurement is measurement when an NFG is that no gap is needed. The processing module 5102 is configured to determine the first MO.

Optionally, the transceiver module 5101 is configured to perform at least one of communication steps such as sending and/or receiving performed by the terminal 101 in any one of the above methods. Optionally, the processing module 5102 is configured to perform at least one of other steps performed by the terminal 101 in any one of the above methods.

FIG. 5b is a block diagram of a network device according to embodiments of the present disclosure. As shown in FIG. 5b, the network device may include at least one of: a transceiver module 5201 or a processing module 5202. In some embodiments, the transceiver module 5201 is configured to receive first information, in which the first information indicates whether first measurement requires interruption, the first measurement is measurement on a first MO, and the first measurement is measurement when an NFG is that no gap is needed.

Optionally, the transceiver module 5201 is configured to perform at least one of communication steps such as sending and/or receiving performed by the network device 102 in any one of the above methods. Optionally, the processing module 5202 is configured to perform at least one of other steps performed by the network device 102 in any one of the above methods.

In some embodiments, the transceiver module may include a sending module and/or a receiving module, which may be separate or integrated together. Optionally, the transceiver module may be interchangeably used with a transceiver.

In some embodiments, the processing module may be one module, or may include a plurality of sub-modules. Optionally, the plurality of sub-modules respectively perform all or part of steps required to be performed by the processing module. Optionally, the processing module may be interchangeably used with a processor.

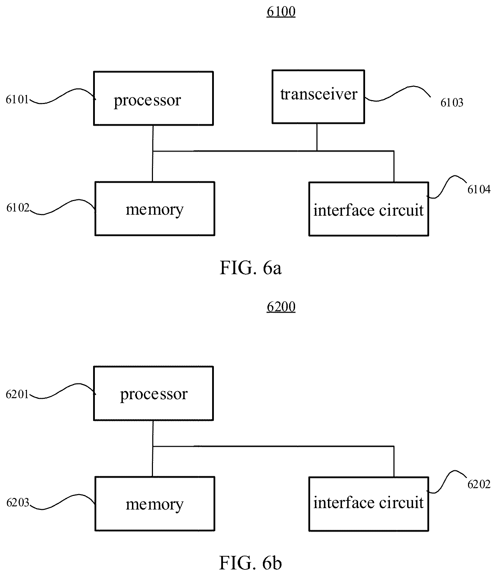

FIG. 6a is a block diagram of a communication device 6100 according to embodiments of the present disclosure. The communication device 6100 may be a network device (for example, an access network device, a core network device, etc.), or may be a terminal (for example, a user equipment, etc.), or may be a chip, a chip system, or a processor supporting a network device to implement any one of the above methods, or may be a chip, a chip system, or a processor supporting a terminal to implement any one of the above methods. The communication device 6100 may be used to implement the method described in the above method embodiments. For details, reference may be made to the descriptions in the above method embodiments.

As shown in FIG. 6a, the communication device 6100 includes one or more processors 6101. The processor 6101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. The communication device 6100 is configured to execute any one of the above methods.

In some embodiments, the communication device 6100 further includes one or more memories 6102 for storing instructions. Optionally, all or part of the memories 6102 may also be located outside the communication device 6100.

In some embodiments, the communication device 6100 further includes one or more transceivers 6103. When the communication device 6100 includes one or more transceivers 6103, the transceiver 6103 performs at least one of communication steps such as sending and/or receiving in the above methods (for example, S2101 or S2102, but not limited to these), and the processor 6101 performs at least one of other steps (for example, S2103, S2104, or S2105, but not limited to these).

In some embodiments, the transceiver may include a receiver and/or a transmitter, which may be separate or integrated together. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 6100 may include one or more interface circuits 6104. Optionally, the interface circuit 6104 is connected to the memory 6102, and the interface circuit 6104 may be used to receive signals from the memory 6102 or other devices, and may be used to send the signals to the memory 6102 or other devices. For example, the interface circuit 6104 may read instructions stored in the memory 6102 and send the instructions to the processor 6101.

The communication device 6100 in the description of the above embodiments may be a network device or a terminal, but the scope of the communication device 6100 described in the present disclosure is not limited thereto, and the structure of the communication device 6100 may not be limited by FIG. 6a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 6b is a block diagram of a chip 6200 according to embodiments of the present disclosure. For the case where the communication device 6100 may be a chip or a chip system, reference may be made to the block diagram of the chip 6200 shown in FIG. 6b, but it is not limited thereto.

The chip 6200 includes one or more processors 6201, and the chip 6200 is configured to execute any one of the above methods.

In some embodiments, the chip 6200 further includes one or more interface circuits 6202. Optionally, the interface circuit 6202 is connected to a memory 6203, the interface circuit 6202 may be used to receive signals from the memory 6203 or other devices, and the interface circuit 6202 may be used to send the signals to the memory 6203 or other devices. For example, the interface circuit 6202 may read instructions stored in the memory 6203 and send the instructions to the processor 6201.

In some embodiments, the interface circuit 6202 performs at least one of communication steps such as sending and/or receiving in the above methods (for example, S2101 or S2102, but not limited to these), and the processor 6201 performs at least one of other steps (for example, S2103, S2104, or S2105, but not limited to these).

In some embodiments, terms such as interface circuit, interface, transceiver pin, transceiver, etc. may be used interchangeably.

In some embodiments, the chip 6200 further includes one or more memories 6203 for storing instructions. Optionally, all or part of the memories 6203 may be located outside the chip 6200.

The present disclosure also provides a storage medium for storing instructions. When the instructions are running on the communication device 6100, the communication device 6100 is caused to implement any one of the above methods. Optionally, the storage medium is an electronic storage medium. Optionally, the electronic storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure also provides a program product. When the program product is executed by the communication device 6100, the communication device 6100 is caused to implement any one of the above methods. Optionally, the program product is a computer program product.

The present disclosure also provides a computer program. When the computer program is executed on a computer, the computer is caused to implement any one of the above methods.

### INDUSTRIAL UTILITY

In a method of the present disclosure, a terminal sends first information to a network device to report whether interruption is needed in a scenario where a needforgap (NFG) is that no gap is needed, so that the network device may learn a capability of the terminal, facilitating the terminal to perform reasonable measurement according to its own capability, thus improving measurement efficiency in an NFG scenario.

## Claims

1. A method for sending information, comprising:
sending, by a terminal, first information, wherein the first information indicates whether first measurement requires interruption, the first measurement is measurement on a first measurement object (MO), and the first measurement is measurement when a needforgap (NFG) is that no gap is needed; and
determining, by the terminal, the first MO.

2. The method of claim 1, further comprising:
sending, by the terminal, capability information, wherein the capability information indicates whether the terminal supports a capability to report the first information.

3. The method of claim 1 or 2, further comprising:
receiving, by the terminal, second information, wherein the second information indicates the terminal to report the first information for a first frequency.

4. The method of any one of claims 1 to 3, further comprising:
receiving, by the terminal, third information, wherein the third information indicates a first parameter of the first measurement object (MO), and the first parameter indicates a period for the terminal to perform measurement on the first MO.

5. The method of any one of claims 1 to 4, wherein the first MO comprises at least one of:
an MO for which the NFG is that no gap is needed; or
an MO for which the NFG is that no gap but interruption is needed.

6. The method of any one of claims 1 to 5, wherein
a carrier specific scaling factor (CSSF) corresponding to the MO for which the NFG is that no gap is needed is defined by a protocol.

7. The method of claim 6, wherein a value of the CSSF is one of:
a number of MOs for which the NFG is that no gap is needed; or
a number of MOs for which the NFG is that no gap but interruption is needed.

8. The method of any one of claims 4 to 7, wherein a first period T corresponding to the first measurement satisfies:
T = a number of sampling points * first parameter * CSSF, wherein the first period comprises a time period for primary synchronization signal (PSS) detection or secondary synchronization signal (SSS) detection, a time period for time index detection, and a measurement period defined by a protocol,
wherein the terminal supports that the NFG is that no gap is needed, or the terminal supports that the NFG is that no measurement gap (MG) but interruption is needed.

9. The method of claim 4 or 8, wherein
the first information further indicates whether the terminal supports a first capability for simultaneous measurement on different radio frequency (RF) chains.

10. The method of claim 9, wherein
the first parameter is applicable to an NFG being that no measurement gap (MG) is needed, wherein the terminal does not support the first capability; or
the first parameter is applicable to an NFG being that no MG but interruption is needed, wherein the terminal supports the first capability.

11. A method for receiving information, comprising:
receiving, by a network device, first information, wherein the first information indicates whether first measurement requires interruption, the first measurement is measurement on a first measurement object (MO), and the first measurement is measurement when a needforgap (NFG) is that no gap is needed.

12. The method of claim 11, further comprising:
receiving capability information, wherein the capability information indicates whether a terminal supports a capability to report the first information.

13. The method of claim 11 or 12, further comprising:
sending second information, wherein the second information indicates the terminal to report the first information for a first frequency.

14. The method of any one of claims 11 to 13, further comprising:
sending, by the network device, third information, wherein the third information indicates a first parameter of the first measurement object (MO), and the first parameter indicates a period for the terminal to perform measurement on the first MO.

15. The method of any one of claims 11 to 14, wherein the first MO comprises at least one of:
an MO for which the NFG is that no gap is needed; or
an MO for which the NFG is that no gap but interruption is needed.

16. The method of any one of claims 11 to 15, wherein
a carrier specific scaling factor (CSSF) corresponding to the MO for which the NFG is that no gap is needed is defined by a protocol.

17. The method of claim 16, wherein a value of the CSSF is one of:
a number of MOs for which the NFG is that no gap is needed; or
a number of MOs for which the NFG is that no gap but interruption is needed.

18. The method of any one of claims 14 to 17, wherein a first period T of the first measurement satisfies:
T = a number of sampling points * first parameter * CSSF, wherein the first period comprises a time period for primary synchronization signal (PSS) detection or secondary synchronization signal (SSS) detection, a time period for time index detection, and a measurement period defined by a protocol,
wherein the terminal supports that the NFG is that no gap is needed, or the terminal supports that the NFG is that no measurement gap (MG) but interruption is needed.

19. The method of claim 14 or 18, wherein
the first information further indicates whether the terminal supports a first capability for simultaneous measurement on different radio frequency (RF) chains.

20. The method of claim 19, wherein
the first parameter is applicable to an NFG being that no measurement gap (MG) is needed, wherein the terminal does not support the first capability; or
the first parameter is applicable to an NFG being that no MG but interruption is needed, wherein the terminal supports the first capability.

21. A terminal, comprising:
a transceiver module, configured to send first information, wherein the first information indicates whether first measurement requires interruption, the first measurement is measurement on a first measurement object (MO), and the first measurement is measurement when a needforgap (NFG) is that no gap is needed; and
a processing module, configured to determine the first MO.

22. A network device, comprising:
a transceiver module, configured to receive first information, wherein the first information indicates whether first measurement requires interruption, the first measurement is measurement on a first measurement object (MO), and the first measurement is measurement when a needforgap (NFG) is that no gap is needed.

23. A terminal, comprising:
one or more processors,
wherein the terminal is configured to implement the method of any one of claims 1 to 10.

24. A network device, comprising:
one or more processors,
wherein the network device is configured to implement the method of any one of claims 11 to 20.

25. A communication system, comprising a terminal and a network device, wherein the terminal is configured to implement the method of any one of claims 1 to 10, and the network device is configured to implement the method of any one of claims 11 to 20.

26. A storage medium for storing instructions that, when executed by a communication device, cause the communication device to implement the method of any one of claims 1 to 10, or the method of any one of claims 11 to 20.
